# FASCICULE DE BREVET EUROPEEN

(11) **EP 3 403 482 B1**
(45) Date de publication et mention de la délivrance du brevet: **13.05.2020**
(21) Numéro de dépôt: 18171977.4
(22) Date de dépôt: 14.05.2018
(51) Int. Cl.: A01B 73/06

(54) **CHÂSSIS PORTE OUTILS DE TRAVAIL DU SOL À TRONÇON ARRIÈRE CENTRAL RELEVABLE**
WERKZEUGHALTERAHMEN FÜR DIE BODENBEARBEITUNG MIT HOCHKLAPPBAREM HINTEREN MITTLEREN ABSCHNITT
FRAME SUPPORTING SOIL-TILLING TOOLS WITH RAISING CENTRAL REAR SECTION

(30) Priorité: 15.05.2017 FR 1754269
(43) Date de publication de la demande: 21.11.2018
(73) Titulaire: Ribouleau Monosem, 79240 Largeasse (FR)
(72) Inventeur: MOUSSET, Freddy, 79320 CHANTELOUP (FR)
(74) Mandataire: Kessler, Marc

(56) Documents cités:
- WO-A1-2014/007856
- FR-A1- 2 871 988
- FR-A2- 2 483 731
- GB-A- 2 246 938
- US-A- 4 171 022
- US-A1- 2011 315 410
- US-A1- 2017 006 762

## Description

### Objet de l'invention

Le domaine de l'invention est celui de la conception et de la fabrication des dispositifs de travail du sol destinés à être tractés par un véhicule tracteur à la surface d'un champ afin de travailler le sol, par exemple d'y semer des graines, d'y déposer du fertilisant, de biner le sol ou autre.

L'invention concerne notamment le châssis d'un tel dispositif.

### Etat de la technique

Les semoirs comprennent classiquement un châssis portant des éléments semeurs disposés à intervalle régulier pour déposer des graines généralement à l'unité dans des sillons formés dans le sol.

Afin de permettre d'ensemencer une surface importante à chaque passage, et ainsi d'augmenter la productivité, les semoirs présentent généralement une largeur importante, par exemple de l'ordre de 13 mètres.

Ils peuvent, par exemple, permettre de semer à chaque passage 16 rangs à un intervalle compris entre 60 et 80 cm ou bien 24 rangs à intervalle compris entre 45 cm et 50,8 cm (20").

Ils peuvent également permettre d'apporter pendant le semis de l'engrais sous forme solide ou liquide par l'intermédiaire d'une trémie, montée sur le châssis.

Les semoirs doivent pouvoir être déplacés sur route pour être déplacés depuis leur zone de stockage vers différentes surfaces cultivables.

La législation routière n'autorise le déplacement des semoirs sur la voie publique que dans la mesure où leur largeur est limitée à une certaine valeur. Par exemple, la législation française autorise la circulation sur la voie publique des semoirs dont la largeur comprise entre 3 et 3,50 mètres selon le nombre de rangs pouvant être ensemencés à chaque passage par ceux-ci.

Pour satisfaire la législation, les semoirs de grande largeur sont donc pliables.

On connaît ainsi des semoirs dont le châssis comprend une flèche comprenant une première extrémité solidaire d'une tête d'attelage prévue pour permettre d'atteler le semoir à un véhicule tractant, et une deuxième extrémité solidaire d'un corps de châssis auquel sont liées au moins deux ailes latérales (ou tronçons arrière latéraux), portant des éléments semeurs, et mobiles entre au moins:
- une position de travail dans laquelle les ailes sont déployées et s'étendent dans le prolongement l'une de l'autre de part et d'autre de la flèche sensiblement perpendiculairement à celle-ci et sensiblement parallèlement au sol sur lequel le semoir est déplacé, et
- une position de transport dans laquelle les ailes sont repliées horizontalement pour s'étendre le long de la flèche.

Certains semoirs peuvent également comprendre une aile centrale (ou tronçon arrière central) fixe qui s'étend entre les ailes latérales et dans le prolongement de celles-ci en position de travail pour optimiser l'implantation des graines et éviter le décalage des rangs.

Compte tenu de leur poids, les semoirs reposent sur des roues au rang desquelles figurent:
- des roues porteuses principales, solidarisées au corps de châssis, sur lesquelles reposent le châssis en région centrale dans les positions de travail et de transport, et
- des roues porteuses secondaires, solidarisées aux ailes, sur lesquelles reposent les ailes du châssis en position de travail.

Les roues porteuses secondaires permettent de limiter le balancement latéral, de maintenir la hauteur de travail et d'augmenter la portance du châssis.

Afin de réduire autant que possible la largeur du semoir en position de transport, les ailes latérales doivent être repliées contre la flèche au plus près de celle-ci. Ceci est toutefois délicat compte tenu de la présence des roues porteuses principales avec lesquelles les ailes latérales, ou des éléments qui y sont solidarisés, risquent d'entrer en collision.

Il existe donc un besoin d'améliorer les semoirs, notamment d'optimiser la compacité d'un semoir en position de transport.

Le document WO2014/007856 décrit un semoir, dont les tronçons latéraux se replient vers l'avant, et comprenant des roues de transport permettant, lors du transport, l'ajustement de la hauteur de l'outil et l'augmentation ou la réduction de la longueur de l'empattement entre les pneus du tracteur et les roues de transport du semoir. Cet ajustement se fait par l'emploi d'un essieu de roues de transport, pouvant pivoter d'avant en arrière, le pivotement vers l'arrière de l'attelage permettant d'adopter la position de plantation, et vers l'avant de l'attelage pour le transport lorsque les tronçons latéraux sont repliés vers l'avant.

Dans le domaine des outils de travail du sol, qui ne sont pas également des semoirs, le document GB 2 246 938 décrit un rouleau agricole comprenant un élément de châssis central, et des éléments de châssis extérieurs fixés de manière pivotante à chaque extrémité de l'élément de châssis central, chaque éléments de châssis comprenant un rouleau. Le châssis central comprend des roues de transport, montées sensiblement à l'intérieur des extrémités du châssis central, en contact avec le sol lors du transport, et dégagée du sol, en remontant à l'intérieur du châssis, dans une position de travail, par un mouvement de pivotement vers l'avant du châssis.

Le document FR 2 483 731 A2 décrit une machine agricole à structure repliable.

### Buts de l'invention

L'invention a notamment pour objectif d'apporter une solution efficace à au moins certains de ces différents problèmes.

En particulier, selon au moins un mode de réalisation, un objectif de l'invention est de fournir un châssis de dispositif de travail du sol dont la largeur en position de transport soit faible.

Notamment, l'invention a pour objectif, selon au moins un mode de réalisation, de fournir un tel châssis dont les ailes latérales soient repliées au plus près de la flèche en position de transport.

Un autre objectif de l'invention est, selon au moins un mode de réalisation, de fournir un tel châssis qui soit simple et/ou robuste et/ou économique.

Un objectif supplémentaire de l'invention est de fournir un châssis dont les roues porteuses principale n'entrent pas en collision avec les outils qu'il porte, lorsqu'il passe d'une position de travail à une position de manouvre ou de transport, et inversement.

### Résumé de l'invention

Pour cela, l'invention concerne un châssis porte outils de travail du sol selon la revendication 1 reposant sur des roues porteuses principales en contact constant avec le sol et comprenant une flèche centrale, un corps de châssis solidaire d'une extrémité de ladite flèche, un tronçon arrière central s'étendant perpendiculairement à l'axe longitudinal de la flèche centrale, et s'étendant depuis l'extrémité arrière du corps de châssis vers l'arrière du châssis dans l'axe longitudinal de ladite flèche et étant monté mobile par rapport au corps de châssis entre au moins :
- une position reculée dans laquelle le tronçon arrière central est éloigné de l'extrémité arrière du corps de châssis, et
- une position avancée dans laquelle le tronçon arrière central est rapproché de l'extrémité arrière du corps de châssis, deux tronçons arrière latéraux solidaires du corps de châssis, les tronçons arrière latéraux étant montés mobiles par rapport au corps de châssis entre au moins :
- une position de transport dans laquelle les tronçons arrière latéraux sont repliés essentiellement le long de ladite flèche, et
- une position de travail dans laquelle les tronçons arrière latéraux sont écartés de ladite flèche et s'étendent de part et d'autre du tronçon arrière central essentiellement dans le prolongement de celui-ci,
les roues porteuses principales, tout en restant en contact avec le sol (S), sont mobiles par rapport au corps de châssis entre au moins :
- une position abaissée dans laquelle la distance entre le corps de châssis et le sol est réduite, le châssis étant ainsi en position de travail, et
- une position relevée dans laquelle la distance entre le corps de châssis et le sol est augmentée, le châssis étant ainsi dans une position de manœuvre ou de transport.

Selon l'invention, les roues porteuses principales se déplacent vers l'arrière du châssis pour passer de leur position abaissée à leur position relevée, et inversement.

Selon l'invention, le tronçon arrière central est monté mobile par rapport au corps de châssis entre au moins :
- une position reculée dans laquelle il est éloigné de l'extrémité arrière du corps de châssis, et
- une position avancée dans laquelle il est rapproché de l'extrémité arrière du corps de châssis.

Ainsi, l'invention propose de rendre mobile le tronçon central arrière d'avant en arrière par rapport au corps de châssis. Ceci peut permettre d'éloigner le tronçon central arrière du corps de châssis et des tronçons latéraux qu'il supporte par exemple pour faciliter leur déplacement d'une position à une autre.

Selon une caractéristique possible, les roues porteuses principales sont mobiles en rotation par rapport au corps de châssis selon un axe essentiellement horizontal et essentiellement orthogonal à l'axe longitudinal de la flèche pour passer de l'une à l'autre des positions abaissée et relevée.

Selon une caractéristique possible, les roues porteuses principales sont dans leur position abaissée et le tronçon arrière central dans sa position avancée ou les roues porteuses principales sont dans leur position relevée et ledit tronçon arrière central est dans sa position reculée.

Selon une caractéristique possible, les roues porteuses principales et le tronçon arrière central sont mécaniquement liés de sorte que le passage des roues porteuses principales de leur position abaissée à leur position relevée entraine le passage du tronçon arrière central de sa position avancée à sa position reculée, et inversement.

Selon une caractéristique possible, les roues porteuses principales sont reliées pour former un essieu, l'essieu étant relié au corps de châssis au moyen d'une fourche dont chaque extrémité est articulée au corps de châssis au moyen d'une liaison pivot d'axe essentiellement horizontal et essentiellement orthogonal à l'axe longitudinal de la flèche.

Selon une caractéristique possible, le tronçon arrière central est monté coulissant par rapport à la flèche et est relié à l'essieu par au moins une barre articulée à l'essieu et au tronçon arrière central.

Selon une caractéristique possible, lequel les tronçons arrière latéraux s'étendent au dessus des roues porteuses principales lorsqu'elles se trouvent dans la position relevée de sorte à pouvoir être déplacées de l'une à l'autre de leurs positions de transport et de travail sans interférer avec les roues porteuses principales.

Selon une caractéristique possible, les tronçons arrière latéraux sont mobiles en rotation par rapport audit corps de châssis / les axes de rotation des tronçons arrière latéraux par rapport au corps de châssis étant décalés selon l'axe longitudinal de la flèche.

Selon une caractéristique possible, au moins une roue porteuse secondaire est solidaire d'au moins un des tronçons arrière, la ou les roues porteuses secondaires étant mobiles par rapport au tronçon arrière dont elle(s) est (sont) solidaire(s) entre au moins :
- une position basse dans laquelle la distance verticale entre l'axe de rotation de la roue porteuse secondaire et le tronçon arrière est réduite, et une position haute dans laquelle la distance verticale entre l'axe de rotation de la roue porteuse secondaire et le tronçon arrière est augmentée.

Selon une caractéristique possible, un châssis selon l'invention peut prendre :
- un état de transport dans lequel les tronçons arrière latéraux sont dans la position de transport, les roues porteuses principales sont dans la position relevée, les roues porteuses secondaires sont dans la position basse;
- un état de travail dans lequel les tronçons arrière latéraux sont dans la position de travail, les roues porteuses principales sont dans la position abaissée, les roues porteuses secondaires sont dans la position basse;
- un état de manœuvre dans lequel les tronçons arrière latéraux sont dans la position de travail, les roues porteuses principales sont dans la position relevée, les roues porteuses secondaires situées aux extrémités externes des tronçons arrière latéraux sont dans la position haute, les autres roues secondaires étant le cas échéant dans la position basse.

Selon une caractéristique possible, ledit tronçon arrière central se trouve dans la position avancée dans l'état de travail, et dans la position reculée dans les états de transport et de manœuvre.

Selon une caractéristique possible, les tronçons arrière portent au moins un outil appartenant au groupe comprenant :
- les éléments semeurs;
- les éléments bineurs ;
- les éléments d'enfouissement de fertilisant.

L'invention concerne également un procédé de manœuvre d'un châssis selon l'une quelconque des variantes précédentes, comprenant une étape de déplacement du tronçon arrière central de la position avancée à la position reculée ou inversement.

Le procédé selon l'invention peut comprendre en outre une étape de déplacement des roues porteuses principales d'une position abaissée à une position relevée ou inversement.

### Brève description des figures

La figure 1 illustre un châssis selon l'invention en perspective en état de travail.
La figure 2 illustre un châssis selon l'invention en perspective en état de manœuvre.
La figure 3 illustre un châssis selon l'invention en perspective en état de transport.
La figure 4 illustre un châssis selon l'invention en vue de dessus en état de travail.
La figure 5 illustre une vue partielle de dessus d'un châssis selon l'invention en état de manœuvre.
La figure 6 illustre une vue partielle de dessus d'un châssis selon l'invention dont l'un des tronçons arrière latéraux passe de l'une à l'autre de ses positions.
La figure 7 illustre une vue de dessus partielle d'un châssis selon l'invention dont un des tronçons latéraux se trouve en position de transport, l'autre se trouvant en position de travail.
La figure 8 illustre une vue partielle de côté d'un châssis selon l'invention en état de travail.
La figure 9 illustre une vue partielle de côté d'un châssis selon l'invention passant de l'un à l'autre de ses états de travail et de manœuvre.
La figure 10 illustre une vue partielle de côté d'un châssis selon l'invention en état de manœuvre.
La figure 11 illustre un procédé de manœuvre d'un châssis selon l'invention.

### Description détaillée de l'invention

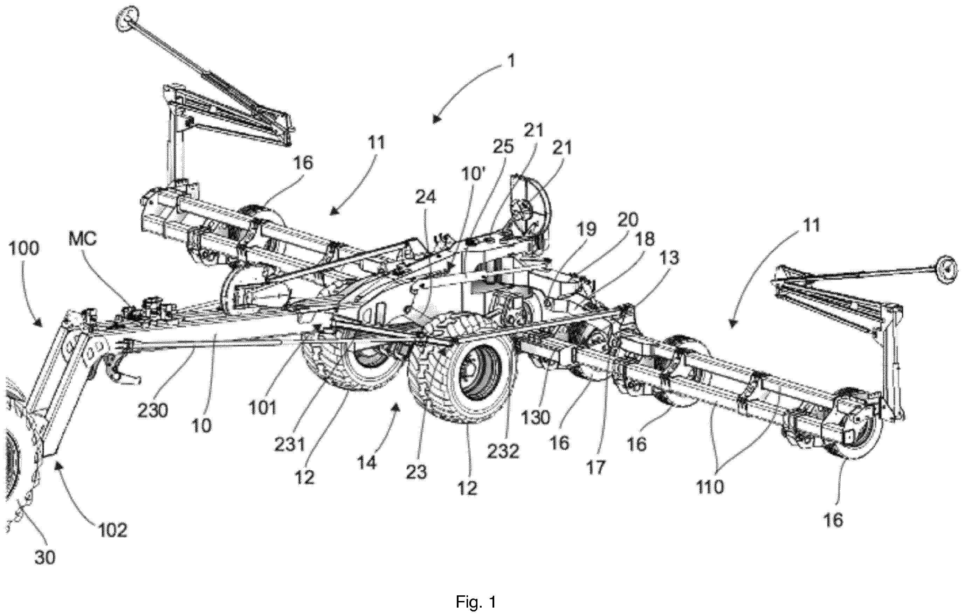

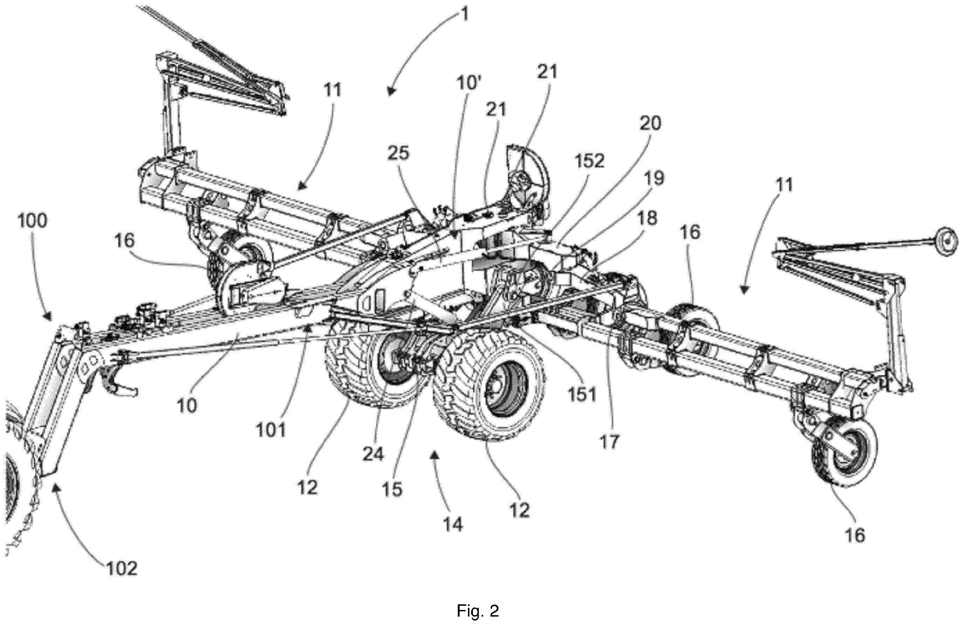

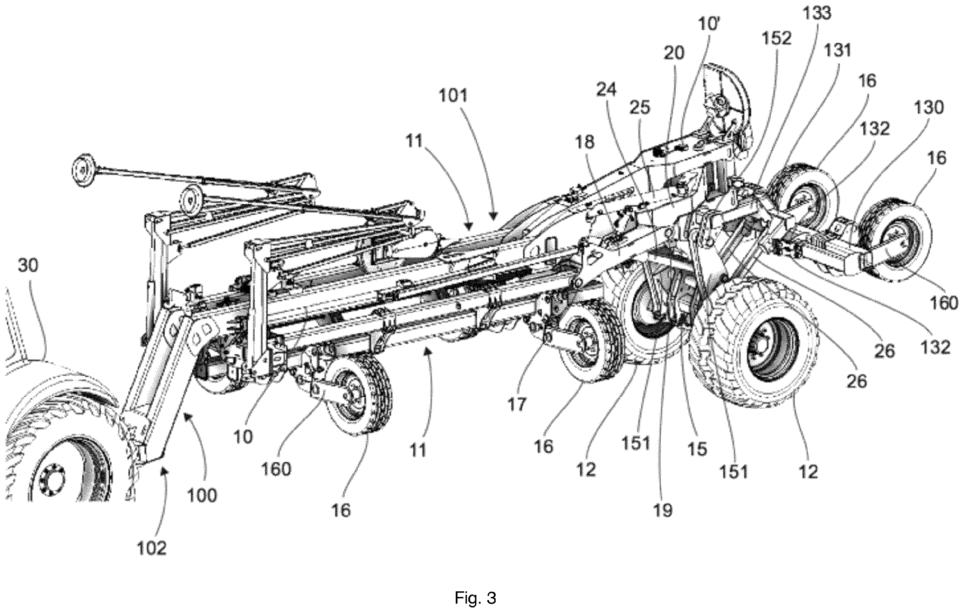

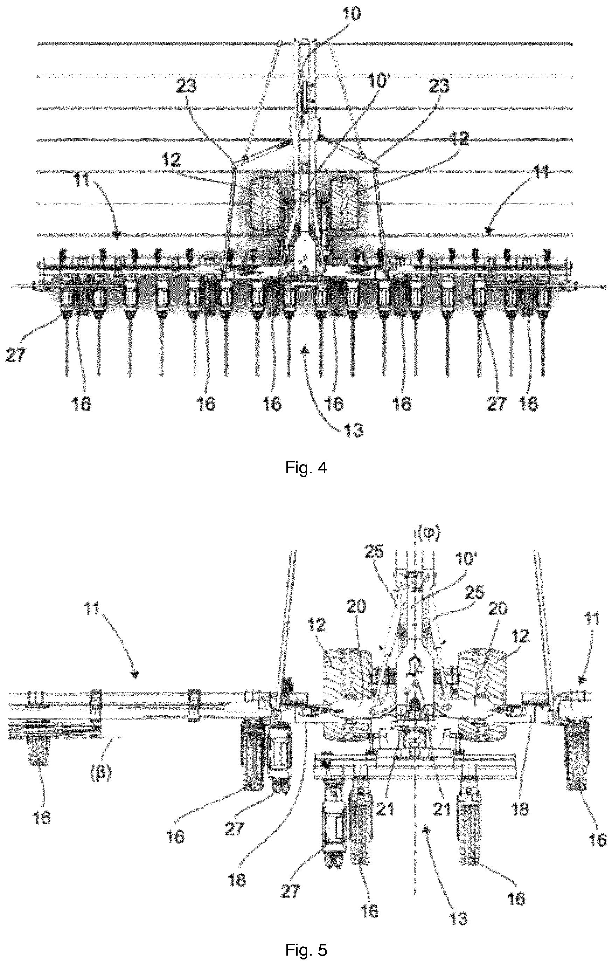

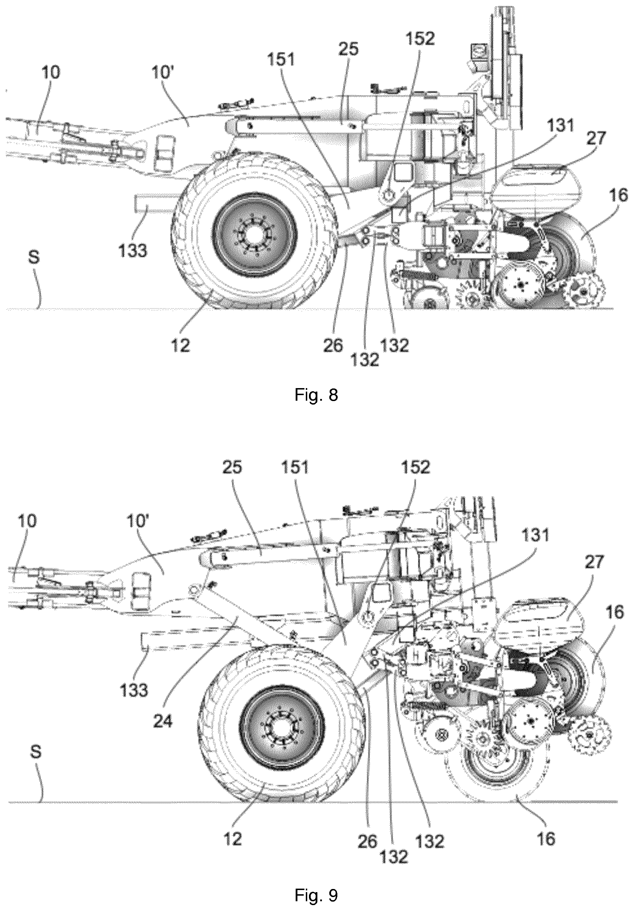

On présente en relation avec les figures 1 à 10 un exemple de châssis porte outils de travail du sol selon l'invention. L'avant du châssis 1 désigne le côté destiné à être connecté à un véhicule tracteur alors que l'arrière du châssis 1 désigne le côté opposé.

Ainsi que cela est représenté sur ces figures, un tel châssis 1 comprend une flèche 10. La flèche 10 comprend une extrémité avant 100 et une extrémité arrière 101. L'extrémité avant 100 comprend une tête d'attelage 102 destinée à coopérer avec l'attelage d'un véhicule tractant 30.

Le châssis 1 comprend un corps de châssis 10' comprenant une extrémité avant solidarisée à l'extrémité arrière 101 de la flèche 10 et une extrémité arrière, opposée à l'extrémité avant.

Le châssis 1 comprend deux tronçons arrière latéraux 11, portant des outils de travail du sol, par exemple des éléments semeurs 27. Les tronçons arrière latéraux 11 sont solidarisés de part et d'autre du corps de châssis 10'. Dans ce mode de réalisation, chaque tronçon arrière latéral 11 comprend deux poutres 110 solidarisées l'une à l'autre sensiblement parallèlement pour former un ensemble mono bloque. Une seule poutre pourrait toutefois être mise en œuvre. Un seul tronçon latéral 11 pourrait également être mis en œuvre.

Chaque tronçon arrière latéral 11 présente une extrémité solidarisée par une liaison pivot 17 d'axe sensiblement horizontal à une première extrémité d'une biellette 18.

La deuxième extrémité de chaque biellette 18, opposée à la première, est solidarisée au moyen d'une liaison pivot 19, d'axe sensiblement horizontal, à une première extrémité d'un bras 20.

Une deuxième extrémité du bras 20, opposée à la première, est solidarisée à l'extrémité arrière du corps de châssis 10' au moyen d'une liaison pivot 21 d'axe essentiellement vertical.

Lorsque deux tronçons arrière latéraux 11 sont mis en œuvre, l'axe de rotation d'un premier tronçon arrière latéral 11 et l'axe de rotation du deuxième tronçon arrière latéral 11, c'est-à-dire les axes des liaisons pivot 21, sont préférentiellement décalés selon l'axe longitudinal de la flèche 10.

Un vérin 25 relit chaque bras 20 au corps de châssis 10' pour permettre de faire tourner chaque tronçon arrière latéral 11, par rapport au corps de châssis 10', autour de l'axe de la liaison pivot 21 correspondant.

Chaque tronçon latéral 11 est relié à la flèche 10 au moyen d'un tirant à double triangulation 23 comprenant une première et une deuxième biellettes 230, 231 articulées à la flèche 10 à une première extrémité et articulées entre-elles à leur extrémité opposée, et une troisième bielle 232 articulée à une première extrémité au tronçon latéral arrière 11, ou en l'occurrence à la bielle 18 correspondante, et articulée à l'extrémité de la deuxième bielle 231 opposée à celle reliée à la flèche 10.

Le châssis 1 comprend un tronçon arrière central 13, portant des outils de travail du sol, par exemple des éléments semeurs 27. Le tronçon arrière central 13 qui s'étend essentiellement perpendiculairement à l'axe longitudinal de la flèche 10 et s'étend depuis l'extrémité arrière du corps de châssis 10' vers l'arrière du châssis 1 dans l'axe longitudinal de la flèche 10. Il s'étend entre les ailes latérales 11 et dans le prolongement de celles-ci en position de travail pour par exemple optimiser l'implantation des graines et éviter le décalage des rangs. Le tronçon arrière central 13 comprend une poutre 130. Il pourrait toutefois en comprendre plusieurs comme les tronçons arrière latéraux 11. Le tronçon arrière central 13 est porté par un berceau 131 auquel la poutre 130 est reliée de manière flottante. Pour cela, la poutre 130 est reliée de chaque côté du berceau 131, essentiellement en forme de U, au moyen d'un couple de biellettes 132 formant un parallélogramme déformable. Chaque biellette 132 est reliée à une extrémité à la poutre 130 au moyen d'une liaison pivot d'axe essentiellement horizontal et essentiellement orthogonal à l'axe longitudinal de la flèche 10, et est reliée à une extrémité opposée au berceau 131 par une liaison pivot d'axe essentiellement horizontal et essentiellement orthogonal à l'axe longitudinal de la flèche 10.

Le montage flottant du tronçon arrière central 13 permet d'ajuster sa position relative par rapport aux tronçons arrière latéraux 11 de sorte qu'ils soient convenablement alignés dans l'état de travail, comme cela ressortira plus clairement par la suite. Ceci permet en effet de régler sa hauteur relative par rapport aux tronçons arrière latéraux 11.

Le berceau 131 est solidaire d'une poutre 133 qui est montée mobile en translation d'avant en arrière par rapport au corps de châssis 10'. Le déplacement d'avant en arrière pourrait toutefois suivre une autre trajectoire que celle d'une translation (par exemple une rotation ou un mouvement combiné).

Les tronçons arrière latéraux 11 et le tronçon arrière central 13 peuvent porter des outils du travail du sol appartenant par exemple au groupe comprenant:
- les éléments semeurs;
- les éléments bineurs ;
- les éléments d'enfouissement de fertilisant;
- ou autre.

Le châssis 1 repose sur le sol par l'intermédiaire de roues porteuses principales 12 et de roues porteuses secondaires 16.

Les roues porteuses principales 12 forment un essieu 14. Cet essieu 14 est relié au corps de châssis 10' au moyen d'une fourche 15 comprenant deux jambes 151 ayant une première extrémité reliée à l'essieu 14 et une deuxième extrémité reliée au corps de châssis 10' au moyen d'une liaison pivot 152 d'axe essentiellement horizontal et essentiellement orthogonal à l'axe longitudinal de la flèche 10.

Un vérin 24, ou une paire de vérins, relit l'essieu 14 au corps de châssis 10' pour permettre de faire pivoter l'essieu selon l'axe des liaisons pivot 152.

L'essieu 14 est relié au berceau 131 au moyen de deux barres 26. Chaque barre 26 est reliée à une extrémité à l'essieu 14 au moyen d'une liaison pivot d'axe essentiellement horizontal et essentiellement orthogonal à l'axe longitudinal de la flèche 10, et est reliée à une extrémité opposée au berceau 131 par une liaison pivot d'axe essentiellement horizontal et essentiellement orthogonal à l'axe longitudinal de la flèche 10.

Les tronçons arrière latéraux 11 et le tronçon arrière central 13 sont supportés préférentiellement par deux roues porteuses secondaires 16. Ils pourraient toutefois être supportés par un nombre de roues porteuses secondaires inférieur ou supérieur à deux. Le nombre de roues porteuses secondaires 16 pourrait être différent d'un tronçon 11 et/ou 13 à un autre.

Chaque roue porteuse secondaire 16 est reliée au tronçon qu'elle supporte par une liaison pivot d'axe essentiellement horizontal et essentiellement orthogonal à l'axe longitudinal de la flèche 10. Des vérins, non représentés, permettent d'agir sur les roues porteuses secondaires 16 pour les déplacer en rotation autour de l'axe de la liaison pivot correspondante. Plus précisément, chaque roue porteuse 16 secondaire est solidaire d'une fourche 160 mobile par rapport au tronçon arrière dont elle est solidaire.

Le châssis 1 comprend classiquement des moyens de commande MC, mécaniques et/ou hydrauliques, pour actionner les différents vérins. Ces moyens de commande pourront par exemple être du type:
- manuel (operateur) en utilisant les commandes hydrauliques du tracteur;
- par séquençage hydraulique (bloc hydraulique) installé sur le semoir;
- par ECU (commande électronique de type automate programmable s'appuyant notamment sur l'information donnée par un ou plusieurs capteurs d'angle installés sur l'attelage et/ou sur le châssis).

Chaque tronçon arrière latéral 11 est monté mobile en rotation à l'extrémité arrière du corps de châssis 10' selon l'axe de la liaison pivot 21 correspondante entre au moins:
- une position de transport dans laquelle il est replié contre ou a proximité de la flèche 10 (Il s'étend alors de préférence essentiellement parallèlement celle-ci), et
- une position de travail dans laquelle il est déployé de sorte qu'il s'écarte de la flèche 10 (Il s'étend alors de préférence essentiellement perpendiculairement à la flèche 10).

Dans la position de travail, les tronçons arrière latéraux 11 s'étendant de part et d'autre du tronçon arrière central 13 et dans l'axe de celui-ci dans un plan essentiellement parallèle au sol.

Les roues porteuses principales 12 sont en contact constant avec le sol (S), en particulier que les tronçons arrière latéraux 11 soient en position de transport ou en position de travail. Les roues porteuses principales 12 sont mobiles par rapport au corps de châssis 10' entre au moins :
- une position abaissée dans laquelle la distance entre le corps de châssis 10' et le sol est réduite, le châssis 1 étant ainsi en position de travail et
- une position relevée dans laquelle la distance entre le corps de châssis 10' et le sol est augmentée le châssis 1 étant ainsi dans une position de manœuvre ou de transport.

Chaque roue porteuse secondaire 16 est mobile par rapport au tronçon 11 et/ou 13 qu'elle supporte (notamment au(x) poutre(s) qu'il comprend) autour de l'axe de la liaison pivot qui la relit avec celui-ci entre au moins :
- une position basse dans laquelle la distance verticale entre l'axe de rotation de la roue porteuse secondaire 16 et le tronçon 11 ou 13 correspondant est réduite, et
- une position haute dans laquelle la distance verticale entre l'axe de rotation de la roue porteuse secondaire 16 et le tronçon 11 ou 13 correspondant est augmentée.

Certaines ou la totalité des roues porteuses secondaires 16 pourraient être fixes. Ceci est en particulier le cas si, dans leur position relevée, les roues porteuses principales 12 permettent de décoller suffisamment du sol les tronçons arrière.

Le tronçon arrière central 13 est monté mobile par rapport à l'extrémité arrière du corps de châssis 10' par coulissement de la poutre 133 entre au moins :
- une position avancée dans laquelle il se trouve rapproché de l'extrémité arrière du corps de châssis 10', le châssis 1 étant en position de travail et
- une position reculée dans laquelle il se trouve éloigné de l'extrémité arrière au corps de châssis 10', le châssis 1 étant en position de transport ou de manœuvre

Le châssis 1 peut prendre trois états, à savoir :
- un état de transport dans lequel les tronçons arrière latéraux 11 sont dans la position de transport, les roues porteuses principales 12 sont dans la position relevée, les roues porteuses secondaires 16 sont dans la position basse, le tronçon arrière central 13 est dans sa position reculée;
- un état de travail dans lequel les tronçons arrière latéraux 11 sont dans la position de travail, les roues porteuses principales 12 sont dans la position abaissée, les roues porteuses secondaires 16 sont dans la position basse, le tronçon arrière central est dans sa position avancée;
- un état de manœuvre dans lequel les tronçons arrière latéraux 11 sont dans la position de travail, les roues porteuses principales 12 sont dans la position relevée, le tronçon arrière central est dans sa position reculée, au moins certaines des roues porteuses secondaires 16 sont en position haute, les autres étant en position basse (par exemple les roues porteuses secondaires situées aux extrémités externes des tronçons arrière latéraux 11 sont dans la position haute, les autres étant dans la position basse).

Le fonctionnement du châssis 1, en particulier sa manœuvre 200, va à présent être décrit en partant de l'état de transport.

L'état de transport, dans lequel le châssis 1 repose seulement sur les roues porteuses principales 12, est pris pour permettre de déplacer le châssis 1 sur la voie publique dans une version compacte de faible largeur.

Le passage de l'état de transport à l'état de travail est obtenu en agissant sur les moyens de commande configurés pour :
- agir sur les vérins 25 de sorte à faire pivoter les tronçons arrière latéraux 11 vers l'arrière autour des axes des liaisons pivot 21 de sorte à les déplacer de leur position de transport à leur position de travail dans laquelle ils sont au moins en partie déployés, se trouvent écartés de la flèche 10 et s'étendent par exemple essentiellement perpendiculairement à l'axe longitudinal de la flèche 10 (cette perpendicularité peut ne pas être parfaite par exemple à + / - 10°) ;
- agir sur les vérins commandant le passage des roues porteuses secondaires 16 de l'une à l'autre leurs positions haute et basse pour les maintenir en position basse;
- agir sur les vérins 24 de sorte à faire pivoter l'essieu 14 des roues porteuses principales 12 autour des axes des liaisons pivot 152 vers l'avant du châssis 1 pour les placer dans leur position abaissée, et à faire passer le tronçon arrière central 13 depuis sa position reculée à sa position avancée (étape 201), dans lequel il s'étend dans l'axe des tronçons arrière latéraux 11, les mouvements de l'essieu 14 et du tronçon arrière central 13 étant liés, du fait de la mise en œuvre des barres 26, pour passer de leurs positions relevée et reculée à leurs positions abaissée et avancée, et inversement.

Dans l'état de travail, le châssis 1 repose sur les roues porteuses principales 12 et sur les roues porteuses secondaires 16. Les roues porteuses principales 12 sont placées en avant des roues porteuses secondaires 16.

Lorsque les tronçons arrière latéraux 11 et le tronçon arrière central 13 portent des outils de travail du sol, par exemple des éléments semeurs 27, ceux-ci se trouvent en prise avec le sol. L'état de travail est pris lorsque l'on souhaite procéder au travail du sol, par exemple à l'ensemencement d'une surface cultivable.

Lorsqu'il est souhaité de manœuvrer le châssis 1 sur une surface cultivable, par exemple pour lui faire prendre un virage en bout de champs, le châssis 1 est placé dans son état de manœuvre.

Ce passage est obtenu en agissant sur les moyens de commande configurés pour :
- agir sur le vérin 24 de sorte à faire pivoter l'essieu des roues porteuses principales 12 autour des axes des liaisons pivot 152 vers l'arrière du châssis 1 pour les placer en position relevée, et à faire passer le tronçon arrière central 13 depuis sa position avancée à sa position reculée (étape 201) et
- agir sur les vérins commandant le passage des roues porteuses secondaires 16 de l'une à l'autre de leurs positions haute et basse pour placer au moins certaines d'entre elles en position haute, par exemple celles situées aux extrémités extérieures.

Le châssis 1 repose alors sur les roues porteuses principales 12 et au moins sur certaines roues porteuses secondaires 16, les outils de travail du sol, par exemple les éléments semeurs 27, n'étant pas en prise avec le sol. Il est alors possible de déplacer aisément le châssis 1 à la surface du sol.

Le fait que le passage des roues porteuses principales 12 de leur position abaissée à leur position relevée, dans laquelle est sont déplacées vers l'arrière du châssis, s'accompagne du recul du tronçon arrière central 13 dans sa position reculée, permet d'éviter que les roues porteuses principales 12 n'entrent en collision avec le tronçon arrière central 13 et les éléments qu'il porte, notamment les outils de travail du sol, par exemple les éléments semeurs 27.

Le passage dans l'état de transport, depuis l'état de travail ou l'état de manœuvre, est obtenu en agissant sur les moyens de commande configurés pour :
- si les roues porteuses principales 12 ne sont pas déjà en position relevée, agir sur les vérins 24 de sorte à faire pivoter l'essieu des roues porteuses principales 12 autour des axes des liaisons pivot 152 vers l'arrière du châssis 1 pour placer les roues porteuses principales 12 en position relevée, et à faire passer le tronçon arrière central 13 depuis sa position avancée à sa position reculée, les mouvements de l'essieu 14 et du tronçon arrière central 13 étant liés, du fait de la mise en œuvre des barres 26, pour passer de leurs positions abaissée et avancée à leurs positions relevée et reculée;
- agir sur les vérins commandant le passage des roues porteuses secondaires 16 de l'une à l'autre leurs positions haute et basse pour faire passer celles qui ne seraient pas déjà en position basse dans cette position;
- agir sur les vérin 25 de sorte à faire pivoter les tronçons arrière latéraux 11 vers l'avant autour des axes des liaisons pivot 21 de sorte à les déplacer de leur position de travail à leur position de transport dans laquelle ils s'étendent essentiellement le long de la flèche 10.

Lorsque les roues porteuses principales 12 se trouvent dans la position relevée, les tronçons arrière latéraux 11 s'étendent au-dessus roues porteuses principales 12. Les tronçons arrière latéraux 11 peuvent ainsi être déplacés de l'une à l'autre de leurs positions de transport et de travail sans interférer avec les roues porteuses principales 12 et être repliés au plus près de la flèche 10 pour augmenter la compacité du châssis en position de transport.

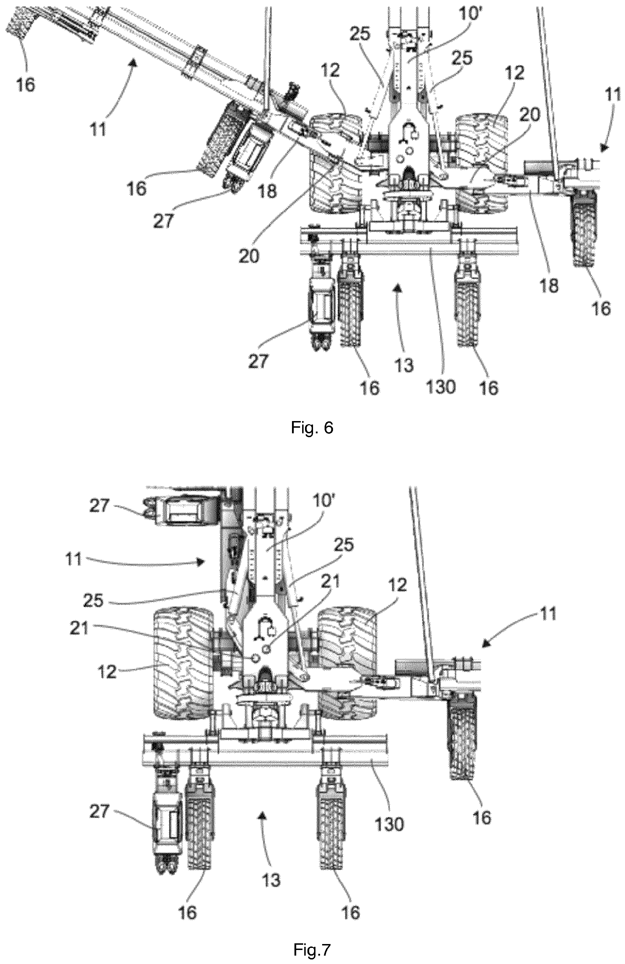

Ainsi que cela est visible sur la figure 6, du fait que les roues porteuses principales 12 sont reculées vers l'arrière du châssis 1 en position relevée associé au fait que les tronçons arrière latéraux 11 s'étendent essentiellement au-dessus des roues porteuses principales 12 lorsqu'elle sont en position relevée, permet aux tronçons arrière latéraux 11 de contourner, sans interférence, les roues porteuses principales 12 pour passer de l'une à l'autre de leurs positions de travail et de transport.

Dans la position de transport, les axes des liaisons 17 et 19 sont essentiellement horizontaux et essentiellement orthogonaux à l'axe longitudinal de la flèche 10.

Dans la position de travail, les axes des liaisons 17 et 19 sont essentiellement horizontaux et essentiellement parallèles à l'axe longitudinal de la flèche 10.

Les axes des liaisons 21 sont essentiellement verticaux.

Bien entendu, l'orientation de ces axes varie selon la position des roues porteuses principales 12.

Les axes de rotation des roues porteuses principale 12 et des roues porteuses secondaires 16 sont décalés le long de l'axe longitudinal de la flèche 10. Selon leur position, la position du centre de gravité du châssis 1 bouge. La position relative de ces axes est déterminée pour éviter le phénomène de charge négative sur l'attelage (on évite que la tête d'attelage tende à être déplacée vers le haut sous l'effet du poids de l'arrière du châssis).

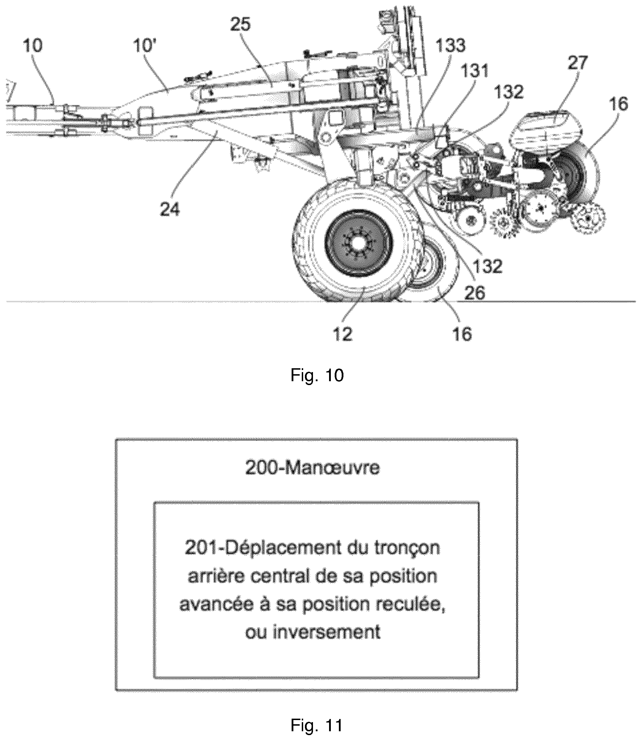

Selon l'invention, et en référence à la figure 11, la manœuvre 200 d'un châssis 1 selon l'invention comprend une étape 201 de déplacement dudit tronçon arrière central 13 de ladite position avancée à ladite position reculée ou inversement.

Dans une variante, un seul tronçon latéral 11 pourra être mis en œuvre.

Dans une autre variante, les roues porteuses principales 12 et le tronçon arrière central 13 pourront ne pas être liés mécaniquement en mouvement. Des actionneurs différents pourront être mis en œuvre pour assurer d'une part le déplacement des roues porteuse principales 12 de l'une à l'autre de leurs positions et d'autre part le déplacement du tronçon arrière central 13 de l'une à l'autre de ses positions. Les moyens de commande, qui peuvent être mécaniques et/ou hydrauliques, seront alors configurés pour synchroniser les mouvements des roues porteuses principales 12 et du tronçon arrière central 13 de sorte que le déplacement des roues porteuses principales 12 de leur position abaissée à leur position relevée s'accompagne d'un déplacement du tronçon arrière central 13 de sa position avancée à sa position reculée, et inversement.

Dans le mode de réalisation décrit, la flèche est fixe. Dans une variante, elle pourrait être télescopique et comprendre au moins un élément avant et un élément arrière coulissant l'un par rapport à l'autre.

## Revendications

1. Châssis (1) porte outils de travail du sol (27), reposant sur des roues porteuses principales (12) en contact constant avec le sol (S), et comprenant
une flèche centrale (10),
un corps de châssis (10') solidaire d'une extrémité de ladite flèche (10),
un tronçon arrière central (13) s'étendant perpendiculairement à l'axe longitudinal de ladite flèche centrale (10), et s'étendant depuis l'extrémité arrière dudit corps de châssis (10') vers l'arrière dudit châssis (1) dans l'axe longitudinal de ladite flèche (10), et étant monté mobile par rapport audit corps de châssis (10') entre au moins :
- une position reculée dans laquelle ledit tronçon arrière central (13) est éloigné de l'extrémité arrière dudit corps de châssis (10'), et
- une position avancée dans laquelle ledit tronçon arrière central (13) est rapproché de l'extrémité arrière dudit corps de châssis (10'),
deux tronçons arrière latéraux (11) solidaires dudit corps de châssis (10'), et étant montés mobiles par rapport audit corps de châssis (10') entre au moins :
- une position de transport dans laquelle, lesdits tronçons arrière latéraux (11) sont repliés essentiellement le long de ladite flèche (10), et
- une position de travail dans laquelle lesdits tronçons arrière latéraux (11) sont écartés de ladite flèche (10) et s'étendent de part et d'autre dudit tronçon arrière central (13) essentiellement dans le prolongement de celui-ci,
lesdites roues porteuses principales (12), tout en restant en contact avec le sol (S), sont mobiles par rapport audit corps de châssis (10') entre au moins :
- une position abaissée dans laquelle la distance entre ledit corps de châssis (10') et le sol (S) est réduite, le châssis étant ainsi en position de travail, et
- une position relevée dans laquelle la distance entre ledit corps de châssis (10') et le sol (S) est augmentée, le châssis étant ainsi dans une position de manœuvre ou de transport,
lesdites roues porteuses principales (12) se déplaçant vers l'arrière du châssis (1) pour passer de leur position abaissée, ledit châssis (1) étant ainsi en position de travail, à leur position relevée, ledit châssis (1) étant ainsi dans une position de manœuvre ou de transport, et inversement.

2. Châssis (1) selon la revendication 1, dans lequel les roues porteuses principales (12) sont mobiles en rotation par rapport au corps de châssis (10') selon un axe essentiellement horizontal et essentiellement orthogonal à l'axe longitudinal (ϕ) de la flèche (10) pour passer de l'une à l'autre des positions abaissée et relevée.

3. Châssis (1) selon l'une quelconque des revendications précédentes, dans lequel les roues porteuses principales (12) sont dans leur position abaissée et le tronçon arrière central (13) dans sa position avancée ou lesdites roues porteuses principales (12) sont dans leur position relevée et ledit tronçon arrière central (13) est dans sa position.

4. Châssis (1) selon la revendication selon l'une quelconque des revendications précédentes dans lequel les roues porteuses principales (12) et le tronçon arrière central (13) sont mécaniquement liés de sorte que le passage desdites roues porteuses principales (12) de leur position abaissée à leur position relevée entraine le passage dudit tronçon arrière central (13) de sa position avancée à sa position reculée, et inversement.

5. Châssis (1) selon l'une quelconque des revendications précédentes, dans lequel les roues porteuses principales (12) sont reliées pour former un essieu (14), ledit essieu (14) étant relié au corps de châssis (10') au moyen d'une fourche (15) dont chaque extrémité est articulée audit corps de châssis (10') au moyen d'une liaison pivot d'axe essentiellement horizontal et essentiellement orthogonal à l'axe longitudinal (ϕ) de ladite flèche (10).

6. Châssis (1) selon la revendication 5 dans lequel le tronçon arrière central (13) est monté coulissant par rapport à ladite flèche (10) et est relié à l'essieu (14) par au moins une barre (26) articulée audit essieu (14) et audit tronçon arrière central (13).

7. Châssis (1) selon l'une quelconque des revendications précédentes dans lequel les tronçons arrière latéraux (11) s'étendent au dessus des roues porteuses principales (12) lorsqu'elles se trouvent dans la position relevée de sorte à pouvoir être déplacées de l'une à l'autre de leurs positions de transport et de travail sans interférer avec lesdites roues porteuses principales (12).

8. Châssis (1) selon l'une quelconque des revendications précédentes dans lequel les tronçons arrière latéraux (11) sont mobiles en rotation par rapport au corps de châssis (10'), les axes de rotation desdits tronçons arrière latéraux (11) par rapport audit corps de châssis (10') étant décalés selon l'axe longitudinal (ϕ) de la flèche (10).

9. Châssis (1) selon l'une quelconque des revendications précédentes dans lequel au moins une roue porteuse secondaire (16) est solidaire d'au moins un des tronçons arrière (11, 13), la ou lesdites roues porteuses secondaires (16) étant mobiles par rapport au tronçon arrière dont elle(s) est (sont) solidaire(s) entre au moins :
- une position basse dans laquelle la distance verticale entre l'axe de rotation (β) de ladite roue porteuse secondaire (16) et le tronçon arrière (13) est réduite, et
- une position haute dans laquelle la distance verticale entre l'axe de rotation (β) de ladite roue porteuse secondaire (16) et le tronçon arrière (13) est augmentée.

10. Châssis (1) selon l'une quelconque des revendications 1ou 9 ayant :
- un état de transport dans lequel les tronçons arrière latéraux (11) sont dans la position de transport, les roues porteuses principales (12) sont dans la position relevée, les roues porteuses secondaires (16) sont dans la position basse;
- un état de travail dans lequel lesdits tronçons arrière latéraux (11) sont dans la position de travail, lesdites roues porteuses principales (12) sont dans la position abaissée, lesdites roues porteuses secondaires (16) sont dans la position basse;
- un état de manœuvre dans lequel lesdits tronçons arrière latéraux (11) sont dans ladite position de travail, lesdites roues porteuses principales (12) sont dans ladite position relevée, les roues porteuses secondaires (16) situées aux extrémités externes desdits tronçons arrière latéraux (11) sont dans ladite position haute, les autres roues secondaires étant le cas échéant dans la position basse.

11. Châssis (1) selon la revendication 10 dans lequel le tronçon arrière central (13) se trouve dans la position avancée dans l'état de travail, et dans la position reculée dans les états de transport et de manœuvre.

12. Châssis (1) selon rune quelconque des revendications précédentes dans lequel les tronçons arrière portent au moins un outil (27) appartenant au groupe comprenant :
- les éléments semeurs;
- les éléments bineurs ;
- les éléments d'enfouissement de fertilisant.

13. Procédé de manœuvre d'un châssis (1) selon l'une quelconque des revendications précédentes, **caractérisé en ce qu'**il comprend une étape de déplacement du tronçon arrière central (13) d'une position avancée à une position reculée ou inversement.

14. Procédé de manœuvre selon la revendication 13, comprenant en outre une étape de déplacement des roues porteuses principales (12) vers l'arrière du châssis (1) pour passer d'une position abaissée à une position relevée et inversement.

## Patentansprüche

1. Rahmen (1) für Werkzeughalter zur Bodenbearbeitung (27), der auf Hauptstützrädern (12) aufliegt, die in ständigem Kontakt mit dem Boden (S) stehen, und Folgendes aufweist:
eine zentrale Deichsel (10),
einen Rahmenkörper (10'), der fest mit einem Ende der Deichsel (10) verbunden ist,
einen zentralen hinteren Abschnitt (13), der sich senkrecht zur Längsachse der zentralen Deichsel (10) erstreckt und sich vom hinteren Ende des Rahmenkörpers (10') zur Rückseite des Rahmens (1) in der Längsachse der Deichsel (10) erstreckt und in Bezug auf den Rahmenkörper (10') beweglich angebracht ist zwischen mindestens:
- einer zurückgezogenen Position, in der der zentrale hintere Abschnitt (13) vom hinteren Ende des Rahmenkörpers (10') entfernt ist, und
- einer vorgeschobenen Position, in der der zentrale hintere Abschnitt (13) an das hintere Ende des Rahmenkörpers (10') angenähert ist,
zwei seitliche hintere Abschnitte (11), die fest mit dem Rahmenkörper (10') verbunden sind und in Bezug auf den Rahmenkörper (10') beweglich angebracht sind zwischen mindestens:
- einer Transportposition, in der die seitlichen hinteren Abschnitte (11) im Wesentlichen entlang der Deichsel (10) zusammengefaltet sind, und
- einer Arbeitsposition, in der die seitlichen hinteren Abschnitte (11) von der Deichsel (10) entfernt sind und sich zu beiden Seiten des zentralen hinteren Abschnitts (13) im Wesentlichen in der Verlängerung von diesem erstrecken,
wobei die Hauptstützräder (12), die in ständigem Kontakt mit dem Boden (S) stehen, in Bezug auf den Rahmenkörper (10') beweglich sind zwischen mindesten:
- einer abgesenkten Position, in der der Abstand zwischen dem Rahmenkörper (10') und dem Boden (S) verringert ist, sodass sich der Rahmen somit in einer Arbeitsposition befindet, und
- einer angehobenen Position, in der der Abstand zwischen dem Rahmenkörper (10') und dem Boden (S) vergrößert ist, sodass sich der Rahmen somit in einer Handhabungs- oder Transportposition befindet,
wobei sich die Hauptstützräder (12) in Richtung der Rückseite des Rahmens (1) bewegen, um aus ihrer abgesenkten Position, bei der sich der Rahmen (1) somit in einer Arbeitsposition befindet, in ihre angehobene Position zu gelangen, bei der sich der Rahmen (1) somit in einer Handhabungs- oder Transportposition befindet, und umgekehrt.

2. Rahmen (1) nach Anspruch 1, bei dem die Hauptstützräder (12) in Bezug auf den Rahmenkörper (10') beweglich in der Drehung entlang einer im Wesentlichen horizontalen und im Wesentlichen orthogonal zur Längsachse (Φ) der Deichsel (10) befindlichen Achse sind, um von der abgesenkten in die angehobene Position und umgekehrt zu gelangen.

3. Rahmen (1) nach einem der vorhergehenden Ansprüche, bei dem sich die Hauptstützräder (12) in ihrer abgesenkten Position befinden und der zentrale hintere Abschnitt (13) in seiner vorgeschobenen Position oder die Hauptstützräder (12) in ihrer angehobenen Position und der zentrale hintere Abschnitt (13) in seiner Position.

4. Rahmen (1) nach einem der vorhergehenden Ansprüche, bei dem die Hauptstützräder (12) und der zentrale hintere Abschnitt (13) mechanisch so miteinander verbunden sind, dass der Übergang der Hauptstützräder (12) aus ihrer abgesenkten Position in ihre angehobene Position den Übergang des zentralen hinteren Abschnitts (13) aus seiner vorgeschobenen Position in seine zurückgezogene Position und umgekehrt bewirkt.

5. Rahmen (1) nach einem der vorhergehenden Ansprüche, bei dem die Hauptstützräder (12) miteinander verbunden sind, um eine Achse (14) zu bilden, wobei die Achse (14) mit dem Rahmenkörper (10') über eine Gabel (15) verbunden ist, von der jedes Ende über eine Schwenkverbindung drehbar mit einer im Wesentlichen horizontalen und im Wesentlichen orthogonal zur Längsachse (Φ) der Deichsel (10) befindlichen Achse mit dem Rahmenkörper (10') verbunden ist.

6. Rahmen (1) nach Anspruch 5, bei dem der zentrale hintere Abschnitt (13) verschiebbar in Bezug auf die Deichsel (10) angebracht ist und mit der Achse (14) über mindestens eine Stange (26) verbunden ist, die drehbar mit der Achse (14) und dem zentralen hinteren Abschnitt (13) verbunden ist.

7. Rahmen (1) nach einem der vorhergehenden Ansprüche, bei dem sich die seitlichen hinteren Abschnitte (11) oberhalb der Hauptstützräder (12) erstrecken, wenn diese sich so in der angehobenen Position befinden, dass sie von der Transportposition in die Arbeitsposition oder umgekehrt bewegt werden können, ohne mit den Hauptstützrädern (12) zu interferieren.

8. Rahmen (1) nach einem der vorhergehenden Ansprüche, bei dem die seitlichen hinteren Abschnitte (11) in Bezug auf den Rahmenkörper (10') beweglich in der Drehung sind, wobei die Drehachsen der seitlichen hinteren Abschnitte (11) versetzt in Bezug auf den Rahmenkörper (10') entlang der Längsachse (Φ) der Deichsel (10) sind.

9. Rahmen (1) nach einem der vorhergehenden Ansprüche, bei dem mindestens ein sekundäres Stützrad (16) fest mit mindestens einem der hinteren Abschnitte (11, 13) verbunden ist und das oder die sekundären Stützräder (16) beweglich in Bezug auf den hinteren Abschnitt sind, mit dem es/sie fest verbunden ist/sind, zwischen mindestens:
- einer unteren Position, in der der vertikale Abstand zwischen der Drehachse (β) des sekundären Stützrads (16) und dem hinteren Abschnitt (13) verringert ist, und
- einer oberen Position, in der der vertikale Abstand zwischen der Drehachse (β) des sekundären Stützrads (16) und dem hinteren Abschnitt (13) erhöht ist.

10. Rahmen (1) nach einem der vorhergehenden Ansprüche 1 oder 9, der Folgendes aufweist:
- einen Transportzustand, in dem sich die seitlichen hinteren Abschnitte (11) in der Transportposition befinden, sich die Hauptstützräder (12) in der angehobenen Position befinden, sich die sekundären Stützräder (16) in der unteren Position befinden;
- einen Arbeitszustand, in dem sich die seitlichen hinteren Abschnitte (11) in der Arbeitsposition befinden, sich die Hauptstützräder (12) in der abgesenkten Position befinden, sich die sekundären Stützräder (16) in der unteren Position befinden;
- einen Handhabungszustand, in dem sich die seitlichen hinteren Abschnitte (11) in der Arbeitsposition befinden, sich die Hauptstützräder (12) in der angehobenen Position befinden, sich die sekundären Stützräder (16) an den externen Enden der seitlichen hinteren Abschnitte (11) in der oberen Position befinden, sich die anderen sekundären Räder gegebenenfalls in der unteren Position befinden.

11. Rahmen (1) nach Anspruch 10, bei dem sich der zentrale hintere Abschnitt (13) in der vorgeschobenen Position im Arbeitszustand befindet und in der zurückgezogenen Position im Handhabungs- oder Transportzustand.

12. Rahmen (1) nach einem der vorhergehenden Ansprüche, bei dem die hinteren Abschnitte mindestens ein Werkzeug (27) tragen, das zu der Gruppe gehört, die Folgendes aufweist:
- die Aussaatelemente;
- die Auflockerungselemente;
- die Elemente zum Einbringen von Düngemittel.

13. Handhabungsverfahren für einen Rahmen (1) nach einem der vorhergehenden Ansprüche, **dadurch gekennzeichnet, dass** es einen Schritt zum Bewegen des zentralen hinteren Abschnitts (13) aus einer vorgeschobenen Position in eine zurückgezogene Position und umgekehrt aufweist.

14. Handhabungsverfahren nach Anspruch 13, das darüber hinaus einen Schritt zum Bewegen der Hauptstützräder (12) in Richtung der Rückseite des Rahmens (1) aufweist, um aus einer abgesenkten Position in eine angehobene Position und umgekehrt zu gelangen.

## Claims

1. Frame (1) supporting soil-tilling tools (27), resting on main bearing wheels (12) in constant contact with the ground (S), and comprising
a central boom (10),
a frame body (10') integrated with an end of said boom (10),
a central rear section (13) extending perpendicularly to the longitudinal axis of said central boom (10) and extending from the rear end of said frame body (10') to the rear of said frame (1) in the longitudinal axis of said boom (10), and being mounted to move relative to said frame body (10') between at least:
- a retracted position, in which said central rear section (13) is remote from the rear end of said frame body (10'), and
- an advanced position, in which said central rear section (13) is close to the rear end of said frame body (10'),
two lateral rear sections (11) integrated with said frame body (10'), and being mounted to move relative to said frame body (10') between at least:
- a transport position, in which said lateral rear sections (11) are folded essentially along said boom (10), and
- a work position, in which said lateral rear sections (11) are distanced from said boom (10) and extend on either side of said central rear section (13) essentially in the extension thereof,
said main bearing wheels (12), while remaining in contact with the ground (S), are movable relative to said frame body (10') between at least:
- a lowered position, in which the distance between said frame body (10') and the ground (S) is reduced, the frame thus being in the work position, and
- a raised position, in which the distance between said frame body (10') and the ground (S) is increased, the frame thus being in a manoeuvring or transport position,
said main bearing wheels (12) moving towards the rear of the frame (1) in order to switch from their lowered position, said frame (1) thus being in the work position, to their raised position, said frame (1) thus being in a manoeuvring or transport position, and vice versa.

2. Frame (1) according to claim 1, wherein the main bearing wheels (12) are movable in rotation relative to the frame body (10') on an essentially horizontal axis essentially orthogonal to the longitudinal axis (Φ) of the boom (10) in order to switch from one to the other of the lowered and raised positions.

3. Frame (1) according to either of the preceding claims, wherein the main bearing wheels (12) are in their lowered position and the central rear section (13) in its advanced position, or said main bearing wheels (12) are in their raised position and said central rear section (13) is in its position.

4. Frame (1) according to one of the preceding claims, wherein the main bearing wheels (12) and the central rear section (13) are mechanically linked such that the switch of said main bearing wheels (12) from their lowered position to their raised position gives rise to the switch of said central rear section (13) from its advanced position to its retracted position, and vice versa.

5. Frame (1) according to any one of the preceding claims, wherein the main bearing wheels (12) are connected such as to form an axle (14), said axle (14) being connected to the frame body (10') by means of a fork (15) of which each end is articulated to said frame body (10') by means of a pivot link of essentially horizontal axis essentially orthogonal to the longitudinal axis (Φ) of said boom (10).

6. Frame (1) according to Claim 5, wherein the central rear section (13) is mounted to slide relative to said boom (10) and is connected to the axle (14) by at least one bar (26) articulated to said axle (14) and to said central rear section (13).

7. Frame (1) according to any one of the preceding claims, wherein the lateral rear sections (11) extend above the main bearing wheels (12) when they are in the raised position such as to be able to be moved from one to the other of their transport and work positions without interfering with said main bearing wheels (12).

8. Frame (1) according to any one of the preceding claims, wherein the lateral rear sections (11) are movable in rotation relative to the frame body (10'), the rotation axes of said lateral rear sections (11) relative to said frame body (10') being offset along the longitudinal axis (Φ) of the boom (10).

9. Frame (1) according to any one of the preceding claims, wherein at least one secondary bearing wheel (16) is integrated with at least one of the rear sections (11, 13), said secondary bearing wheel(s) (16) being movable relative to the rear section with which it (they) is (are) integrated, between at least:
- a low position, in which the vertical distance between the rotation axis (β) of said secondary bearing wheel (16) and the rear section (13) is reduced, and
- a high position, in which the vertical distance between the rotation axis (β) of said secondary bearing wheel (16) and the rear section (13) is increased.

10. Frame (1) according to either of Claims 1 or 9, having:
- a transport state, in which the lateral rear sections (11) are in the transport position, the main bearing wheels (12) are in the raised position, the secondary bearing wheels (16) are in the low position;
- a work state, in which said lateral rear sections (11) are in the work position, said main bearing wheels (12) are in the lowered position, said secondary bearing wheels (16) are in the low position;
- a manoeuvring state, in which said lateral rear sections (11) are in said work position, said main bearing wheels (12) are in said raised position, the secondary bearing wheels (16) located at the external ends of said lateral rear sections (11) are in said high position, the other secondary wheels being, where appropriate, in the low position.

11. Frame (1) according to Claim 10, wherein the central rear section (13) is in the advanced position in the work state and in the retracted position in the transport and manoeuvring states.

12. Frame (1) according to any one of the preceding claims, wherein the rear sections support at least one tool (27) belonging to the group comprising:
- seeding elements;
- hoeing elements;
- fertilizer-ploughing-in elements.

13. Method for manoeuvring a frame (1) according to any one of the preceding claims, **characterized in that** it comprises a step of moving the central rear section (13) from an advanced position to a retracted position, or vice versa.

14. Manoeuvring method according to Claim 13, comprising, furthermore, a step of moving the main bearing wheels (12) towards the rear of the frame (1) in order to switch from a lowered position to a raised position, and vice versa.
